# EUROPEAN PATENT SPECIFICATION

(11) **EP 2 431 276 B1**
(45) Date of publication and mention of the grant of the patent: **15.03.2017**
(21) Application number: 11181274.9
(22) Date of filing: 14.09.2011
(51) Int. Cl.: B64D 15/00, B64C 11/20

(54) **Propeller blades having icephobic coating**
Propellerblätter mit eisabstoßender Beschichtung
Pales d'hélice dotées de revêtement glaciophobe

(30) Priority: 15.09.2010 GB 201015409
(43) Date of publication of application: 21.03.2012
(73) Proprietor: GE Aviation Systems Limited, Bishops Cleeve Cheltenham Gloucestershire GL52 8SF (GB)
(72) Inventor: Towkan, Michael Fedor, Gloucester, Gloucestershire GL4 0DA (GB)
(74) Representative: Cleary, Fidelma

(56) References cited:
- EP-A1- 1 849 843
- DE-A1- 2 640 360
- US-A- 2 434 208
- US-A1- 2010 126 981

## Description

The invention relates to propeller blades for aircraft, in particular having means to prevent the buildup of ice thereon.

Propellers fitted to aircraft that are approved for flight into known icing conditions must include provisions to prevent unacceptable levels of ice accumulation on the propeller blades. Ice build-up on the aerofoil sections of a propeller blade affects the aerodynamic efficiency of the blade. It is therefore desirable to limit the amount of ice that is allowed to accumulate on the blades, to reduce the loss of aerodynamic efficiency. In addition, to prevent damage to the aircraft fuselage in icing conditions, it is desirable to minimize the size of lumps of ice that are shed from the propellers.

In the prior art, an electrical heater system is controlled by a timer to provide cyclic heating of the blades to control the shedding of ice. The heater system includes an electrical heater blanket on each blade, cabling to connect the heater system to the electrical supply, a means to allow the electrical supply to be transferred from the airframe to the rotating propeller, for instance slip-rings and carbon brushes, and an electronic deicing timer. In use, the heater is a considerable drain on the aircraft electrical generator system. Additionally, in the event that the blades are heated excessively, the melted ice can runback and reform behind the electrically deiced area. This is a potentially hazardous condition for an aircraft. Such electrical heating systems typically require in excess of 1200 watts of electrical power per blade to remove ice effectively. The electrical heating blankets extend all the way to the propeller centrebody which provides the aerodynamic interface to the aircraft nacelle. A further drawback of the prior art heating systems is that damage to a heater element can prevent the entire element from functioning.

US 2434208 is considered to constitute the closest prior art and discloses a propeller blade with an icephobic coating.

EP 1 849 843 A1 relates to erosion resistant anti-icing coatings and discloses providing a coated blade in which an inner span area of the blade is provided with an anti-icing coating.

The present invention provides a propeller blade for rotation about a hub assembly, the blade having a radially inner region and a radially outer region, the blade defining a radial direction along its length from a blade root to a blade tip, wherein the blade has a coating disposed thereon at least along a leading edge of the blade, the coating comprising an icephobic material, the coating radially extending along the blade from the radially inner region to the radially outer region, wherein the radially outer region is disposed between the blade root and the blade tip at a position where rotational forces on the blade are sufficient, in use, to cause removal of ice from an uncoated blade; characterized in that coating has a cohesive coefficient that varies radially along the length of the blade.

In operation, ice accumulates on the blades until such time as the ice mass is sufficient to cause self-shedding under the action of the centrifugal forces on the ice which result from the rotation of the propeller. The force exerted by the ice mass is equivalent to the weight of the ice, multiplied by the radial location of the ice on the blade, multiplied by the square of the rotational speed of the propeller. When the centrifugal force of the ice exceeds the cohesive bond strength between the ice and the blade, the ice breaks away from the blade surface. Over the length of the blade, as the radius (and, thus, the centrifugal field) varies, the amount of ice that has to build up at any specific blade radius to overcome the cohesive bond between the ice and the blade also varies. Near to the tip of the propeller, the centrifugal forces are sufficiently high to prevent significant build up of ice without any icephobic coating.

In one example, the rotational speed of the propeller blade can be of the order of 850rpm, whereby the centrifugal field outside a radius of 1.39m (55 inches) provides sufficient force to shed ice from the blade surface without icephobic coating. Where the acceleration of the ice due to the rotation of the blade exceeds 1100g, the ice tends to self-shed from the blade surface without any coating.

By virtue of the icephobic coating being a passive system, if the coating is damaged, for example by impacts from foreign objects, the coating still functions even if parts of it are destroyed. The invention additionally reduces the demand on the aircraft electrical system for providing electrical power for propeller deicing. The reduction in the number of required elements in the system gives both technical and commercial benefits, improving reliability and maintainability, and also saving both initial acquisition and ongoing maintenance costs.

The invention advantageously reduces the cohesive bond strength between the ice and the blade, such that the radius at which ice accumulated on the blades self-sheds is reduced. The invention further advantageously ensures the cohesive bond strength at the inboard end of the blade, where the blade intersects with the spinner or nacelle, is such that the ice build up does not exceed the maximum allowable for both aerodynamic and fuselage impact considerations. Thus, the reliance on providing electrical, or any other form of assistance for ice shedding, is eliminated.

Where a coating according to the invention is utilized, there is still scope for small amounts of ice to form on the icephobic coating, but the material of the coating is chosen to be sufficiently icephobic so that any ice that is formed will self-shed before it has reached an unacceptable size.

The coating can be applied to the blade on manufacture or can be retrofitted to existing propeller blades.

Icephobic materials that can be used in the coating of the present invention include materials that have a low cohesive coefficient for ice. One example of such a material is PTFE.

There follows a detailed description of embodiments of the invention by way of example only with reference to the accompanying drawings, in which:
Fig. 1 is a schematic cross-sectional view showing the structure of layers of the blade coating according to an embodiment of the invention;
Fig. 2 is a schematic cross-sectional view of a propeller blade embodying the invention; and
Fig. 3 is a side view of a propeller blade embodying the invention.

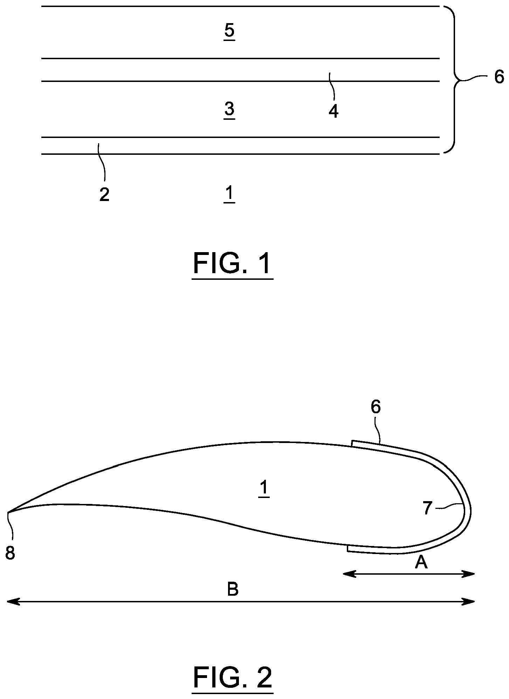

Fig. 1 shows the arrangement of layers of a coating 6 applied to a propeller blade 1. A first layer 2 of adhesive is provided directly adjacent the blade surface 1. A layer 3 of polymer is disposed on the adhesive layer 2 and is thereby firmly secured to the blade surface. The polymer layer 3 can comprise one or more rubber materials such as neoprene. Further, the polymer layer 3 can have a thickness in the range 0.5mm to 1.0mm, for example. On the neoprene layer 3, a tie coat 4 is disposed to provide a suitable surface for bonding a layer 5 of icephobic material to the coating. The tie coat 4 may have a thickness on the order of 1 micron. The thickness of the icephobic material layer 5 can be approximately 3mm. The polymer layer 3 can be coloured, whereby wear of the icephobic material layer 5 and the tie coat 4 exposes the polymer layer to provide an indication of wear of the icephobic material layer 5.

Fig. 2 shows the coating 6 applied to the leading edge 7 of the propeller blade 1. In a preferred embodiment, the coating 6 extends 25% of the chord length of the blade, the chord length being defined as the distance from the leading edge 7 to the trailing edge 8 of the blade 1. In other words, the distance A shown in Fig. 2 is preferably 25% of the distance B. It is desirable to minimize the size of the coating as far as possible to reduce the weight of the propeller blades, while providing sufficient coverage of the blades for the purposes of reducing ice build-up.

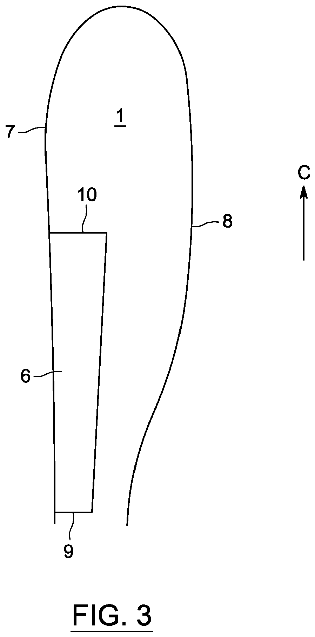

Fig. 3 shows the blade 1 defining a radial direction C along its length from a blade root to a blade tip, wherein disposed thereon at least along the leading edge 7, the blade has a coating 6. The coating 6 extends along the leading edge blade from a radially inner region 9 to a radially outer region 10. The radial extent of the coating 6 is chosen to provide a low cohesion for ice where it is needed, ie the radially inner portions of the blade, whereas the radially outer portions are subject to high enough rotational forces to cause ice to self-shed from the uncoated blade surface. In one embodiment, the coating can have a cohesive coefficient which varies along the length of the blade, reflecting the fact that the rotational forces increase linearly with radius. The cohesive coefficient can increase with increasing radius, whereby the radially inner regions have the highest propensity for shedding ice. This can be achieved by the use of portions of different icephobic materials along the coating. In this way, it is possible to reduce the cost of the coating by only using the costly icephobic materials in the radially inner regions.

## Claims

1. A propeller blade (1) for rotation about a hub assembly, the blade (1) having a radially inner region (9) and a radially outer region (10), the blade (1) defining a radial direction along its length from a blade root to a blade tip, wherein the blade has a coating disposed thereon at least along a leading edge of the blade, the coating (6) comprising an icephobic material, the coating (6) radially extending along the blade (1) from the radially inner region (9) to the radially outer region (10), wherein the radially outer region (10) is disposed between the blade root and the blade tip at a position where rotational forces on the blade (1) are sufficient, in use, to cause removal of ice from an uncoated blade;
**characterized in that**:
the coating (6) has a cohesive coefficient that varies radially along the length of the blade (1).

2. A propeller blade (1) according to claim 1, wherein the radially outer region (10) lies approximately 50% to 70% along the blade.

3. A propeller blade (1) according to either of claim 1 or 2, wherein the cohesive coefficient increases with increasing radius.

4. A propeller blade (1) according to any of the preceding claims, wherein the coating (6) extends from the leading edge (7) of the blade approximately 25% along the chord length of the blade.

5. A propeller blade (1) according to any of the preceding claims, wherein the coating (6) comprises a plurality of layers (2, 3, 4, 5).

6. A propeller blade according to claim 5, wherein the coating (6) comprises first, second, third and fourth layers (2, 3, 4, 5).

7. A propeller blade (1) according to claim 6, wherein the first layer (2) comprises an adhesive material, the second layer (3) comprises a polymer, and the third layer (4) comprises a tie coat for binding the fourth layer (5) to the second layer (3).

## Patentansprüche

1. Propellerblatt (1) zum Drehen um eine Nabeneinheit, wobei das Blatt (1) einen radial inneren Bereich (9) und einen radial äußeren Bereich (10) aufweist und das Blatt (1) eine Radialrichtung entlang seiner Länge von einer Blattwurzel bis zu einem Blattende definiert, wobei das Blatt eine darauf angeordnete Beschichtung mindestens entlang einer Vorderkante des Blatts aufweist, die Beschichtung (6) ein eisphobes Material umfasst, die Beschichtung (6) sich radial entlang dem Blatt (1) vom radial inneren Bereich (9) zum radial äußeren Bereich (10) erstreckt, wobei der radial äußere Bereich (10) zwischen der Blattwurzel und dem Blattende an einer Position angeordnet ist, an der Drehkräfte an dem Blatt (1) in Gebrauch ausreichend sind, um ein Entfernen von Eis von einem unbeschichteten Blatt zu bewirken;
**dadurch gekennzeichnet, dass**:
die Beschichtung (6) einen Kohäsionskoeffizienten aufweist, der radial entlang dem Blatt (1) variiert.

2. Propellerblatt (1) nach Anspruch 1, wobei sich der radial äußere Bereich (10) annähernd 50 % bis 70 % entlang dem Blatt befindet.

3. Propellerblatt (1) nach einem von Anspruch 1 oder 2, wobei der Kohäsionskoeffizient mit ansteigendem Radius ansteigt.

4. Propellerblatt (1) nach einem der vorstehenden Ansprüche, wobei sich die Beschichtung (6) von der Vorderkante (7) des Blatts annähernd 25 % entlang der Sehnenlänge des Blatts erstreckt.

5. Propellerblatt (1) nach einem der vorstehenden Ansprüche, wobei die Beschichtung (6) mehrere Schichten (2, 3, 4, 5) umfasst.

6. Propellerblatt nach Anspruch 5, wobei die Beschichtung (6) erste, zweite, dritte und vierte Schichten (2, 3, 4, 5) umfasst.

7. Propellerblatt (1) nach Anspruch 6, wobei die erste Schicht (2) Klebematerial umfasst, die zweite Schicht (3) ein Polymer umfasst und die dritte Schicht (4) eine Haftbeschichtung zum Binden der vierten Schicht (5) an die zweite Schicht (3) umfasst.

## Revendications

1. Pale d'hélice (1) pour rotation autour d'un ensemble de moyeu, la pale (1) ayant une région radialement interne (9) et une région radialement externe (10), la pale (1) définissant une direction radiale sur sa longueur d'une emplanture de pale à une pointe de pale, dans laquelle la pale a un revêtement qui la recouvre au moins le long d'un bord d'attaque de la pale, le revêtement (6) comprenant un matériau glaciophobe, le revêtement (6) s'étendant radialement le long de la pâle (1) de la région radialement interne (9) à la région radialement externe (10), dans laquelle la région radialement externe (10) est disposée entre l'emplanture de la pale et la pointe de la pale dans une position où les forces de rotation sur la pale (1) sont suffisantes en cours d'utilisation pour provoquer l'élimination de la glace d'une pale non revêtue ;
**caractérisée en ce que** :
le revêtement (6) a un coefficient de cohésion qui varie radialement sur la longueur de la pale (1).

2. Pale d'hélice (1) selon la revendication 1, dans lequel la région radialement externe (10) se situe approximativement sur 50 à 70 % le long de la pale.

3. Pale d'hélice (1) selon l'une ou l'autre des revendications 1 ou 2, dans laquelle le coefficient de cohésion croît en même temps que le rayon.

4. Pale d'hélice (1) selon l'une quelconque des revendications précédentes, dans laquelle le revêtement (6) s'étend du bord d'attaque (7) de la pale approximativement sur 25 % sur la longueur de la corde de la pale.

5. Pale d'hélice (1) selon l'une quelconque des revendications précédentes, dans laquelle le revêtement (6) comprend une pluralité de couches (2, 3, 4, 5).

6. Pale d'hélice selon la revendication 5, dans laquelle le revêtement (6) comprend une première, une deuxième, une troisième et une quatrième couche (2, 3, 4, 5).

7. Pale d'hélice (1) selon la revendication 6, dans laquelle la première couche (2) comprend un matériau adhésif, la deuxième couche (3) comprend un polymère et la troisième couche (4) comprend une couche d'accrochage pour relier la quatrième couche (5) à la deuxième couche (3).
